# EUROPÄISCHE PATENTSCHRIFT

(11) **EP 0 421 201 B1**
(45) Veröffentlichungstag und Bekanntmachung des Hinweises auf die Patenterteilung: **07.01.1993**
(21) Anmeldenummer: 90118114.9
(22) Anmeldetag: 20.09.1990
(51) Int. Cl.: B60J 3/02

(54) **Sonnenblende für Fahrzeuge**
Sun visor for vehicles
Pare-soleil pour véhicules

(30) Priorität: 30.09.1989 DE 3932808
(43) Veröffentlichungstag der Anmeldung: 10.04.1991
(73) Patentinhaber: Gebr. Happich GmbH, D-42097 Wuppertal (DE)
(72) Erfinder: Delcroix, Jean Louis, F-90170 Petit Magny (FR)

(56) Entgegenhaltungen:
- EP-A- 0 023 946
- FR-A- 2 513 578
- US-A- 4 740 028

## Beschreibung

Die Erfindung bezieht sich auf eine Sonnenblende für Fahrzeuge mit einem plattenförmigen Sonnenblendenkörper, der ein darin an einem Endbereich der oberen Längskante eingebettet angeordnetes, als Kunststoff-Spritzgußteil ausgebildetes, eine Sonnenblendenachse einendig aufnehmendes Lagergehäuse, einen Kosmetikspiegel und eine diesem zugeordnete Beleuchtungseinrichtung trägt, welche über durch die Sonnenblendenachse geführte Verbindungsleitungen mit dem Stromversorgungsnetz des Fahrzeugs verbindbar ist.

Sonnenblenden für Fahrzeuge werden häufig mit Kosmetikspiegeln und Beleuchtungseinrichtungen ausgestattet, um zum Komfort und der Bequemlichkeit der Fahrgäste sowie zur Attraktivität des Fahrzeuginnern beizutragen. Dabei bereitet die elektrische Leitungsführung für die Beleuchtungseinrichtung oftmals erhebliche Schwierigkeiten und einen großen Montageaufwand. Üblicherweise werden die Verbindungsleitungen vom Stromversorgungsnetz eines Fahrzeugs zur Beleuchtungseinrichtung durch die hohl ausgebildete Sonnenblendenachse geführt, wie es z.B. in den DE-OSen 29 11 464 und 33 38 279 gezeigt und näher erläutert ist. Bei diesen bekannten Vorbildern ist der zur Stromversorgung der Beleuchtungseinrichtung erforderliche Aufwand sowohl im Hinblick auf die Vielzahl der Einzelteile als auch im Hinblick auf die Vielzahl der erforderlichen Montageschritte beträchtlich und recht kostenintensiv. Hinzu kommt, daß die Funktionstüchtigkeit der elektrischen Einrichtungen nicht zuverlässig erscheint, weil beispielsweise die hohle Sonnenblendenachse aus einem Metallrohr besteht, das an den Enden durch Ablängen bedingte Grate aufweisen kann, durch die die Leiterisolationen beschädigt werden können.

Der vorliegenden Erfindung liegt nun, ausgehend von einer Sonnenblende der eingangs näher erwähnten Art, die Aufgabe zugrunde, die Leiterführung zur elektrischen Stromversorgung der Beleuchtungseinrichtung gegenüber dem aufgezeigten Stand der Technik zu vereinfachen, zu verbessern und zu verbilligen und darüber hinaus Vorsorge dafür zu treffen, daß eine unbedingt zuverlässige Betriebssicherheit gewährleistet ist.

Zur Lösung dieser Aufgabe ist erfindungsgemäß vorgesehen, daß die Sonnenblendenachse als Kunststoff-Spritzgußteil mit einer darin durch Umspritzen eingelagerten mit ihren freien Enden aus den Stirnenden der Sonnenblendenachse heraustretenden Leiterplatte mit elektrisch leitfähigen Bahnen ausgebildet ist.

Die erfindungsgemäße Maßnahme bietet wesentliche Vorteile in verschiedener Hinsicht. Zunächst ist eine als Kunststoff-Spritzgußteil ausgebildete Sonnenblendenachse einfacher und kostengünstiger herzustellen als eine metallische Achse. Auch ist eine solche Kunststoffachse gewichtsarm und den jeweiligen Anforderungen entsprechend farblich zu gestalten. Ein besonderer Vorteil ist darin zu sehen, daß eine Leiterplatte mit z.B. aufgedruckten Leiterbahnen, die in einer Sonnenblendenachse durch Umspritzen eingebettet ist, nicht beschädigt werden kann und daß eine solche Leiterplatte einfach herzustellen oder kostengünstig zu beziehen ist. An die freien Enden der Leiterplatte sind die zur Fahrzeugelektrik und die zur Beleuchtungseinrichtung führenden Verbindungsleitungen in einfacher Weise anschließbar, wozu alle bekannten Verbindungstechniken, wie z.B. auch Löten, angewandt werden können.

Eine Weiterbildung der Erfindung sieht vor, daß die Leiterplatte entsprechend der Sonnenblendenachse L-förmig gestaltet ist, so daß die Leiterplatte ohne vorherige Biegeoperationen in das Formnest einer Spritzgußmaschine eingelegt und sodann umspritzt werden kann.

Die Leiterplatte kann in Weiterbildung der Erfindung aus zähelastischem Kunststoff gebildet sein. Durch diese Maßnahme ergibt sich einerseits der Vorteil, daß die aus den Enden der Sonnenblendenachse heraustretenden Endbereiche der Leiterplatte nicht abbrechen können und andererseits der Vorteil, daß die Leiterplatte neben ihrer ureigenen Aufgabe der elektrischen Stromführung, die Funktion einer Verstärkungseinlage für die Sonnenblendenachse zu übernehmen vermag.

Eine Ausgestaltung der Erfindung zeichnet sich dadurch aus, daß an einem freien Leiterplattenende zwei Kontaktelemente angebracht sind, die in zu bestimmenden Schwenklagen des Sonnenblendenkörpers mit am Lagergehäuse befestigten Gegenkontaktelementen, von denen zur Beleuchtungseinrichtung führende Verbindungsleitungen ausgehen, kontaktierbar sind. Auf diese Weise erhält man einen, durch die Relativbewegung zwischen der Sonnenblendenachse und dem Sonnenblendenkörper zu betätigenden Schalter für das Ein- und Ausschalten der zur Beleuchtungseinrichtung gehörenden Lichtquelle. Dabei können die Kontaktelemente bevorzugterweise aus an die Leiterplatte angeschlagenen metallischen Krampen bestehen, wie auch vorgesehen sein kann, daß die Leiterplatte ein etwa rechteckiges Querschnittsprofil aufweist und daß die Krampen, die U-förmig gestaltet sind, von den Schmalseiten her auf die Leiterplatte aufgebracht sind.

Eine weitere, bevorzugte Ausgestaltung der Erfindung sieht vor, daß die Gegenkontaktelemente als im Lagergehäuse oben- und untenendig abgestützte, einander beabstandete Kontaktfedern ausgebildet sind und daß die Kontaktfedern parallel zueinander und parallel zu den Breitseiten des Sonnenblendenkörpers verlaufend ausgerichtet sind. Dabei ist insbesondere noch vorgesehen, daß der Abstand der Kontaktfedern zueinander größer ist als die Dicke jedoch kleiner ist als die Breite des mit den Kontaktelementen bestückten Leiterplattenendes und daß das mit den Kontaktelementen bestückte Leiterplattenende derart aus dem entsprechenden Endbereich der Sonnenblendenachse heraustritt, daß es mit seinen Breitseiten parallel zu den Kontaktfedern verläuft und damit berührungsfrei zwischen den Kontaktfedern liegt, wenn sich der Sonnenblendenkörper in seiner Nichtgebrauchslage befindet und daß dasselbe Leiterplattenende mit seinen Kontaktelementen die Kontaktfedern auseinanderspreizt und kontaktiert, wenn sich der Sonnenblendenkörper in seiner Gebrauchslage befindet. Durch diese Maßnahmen wird bei Gewährleistung der angestrebten unbedingt zuverlässigen Betriebssicherheit der elektrischen Stromversorgung und Schaltfunktionen eine besonders raumsparende Anordnung erreicht, die der tendenziellen Entwicklung, die Sonnenblendenkörper immer dünner zu gestalten, entgegenkommt.

Ein Ausführungsbeispiel der Erfindung wird im folgenden anhand der Zeichnung näher erläutert. Es zeigen
Fig. 1 eine Sonnenblende in Draufsicht,

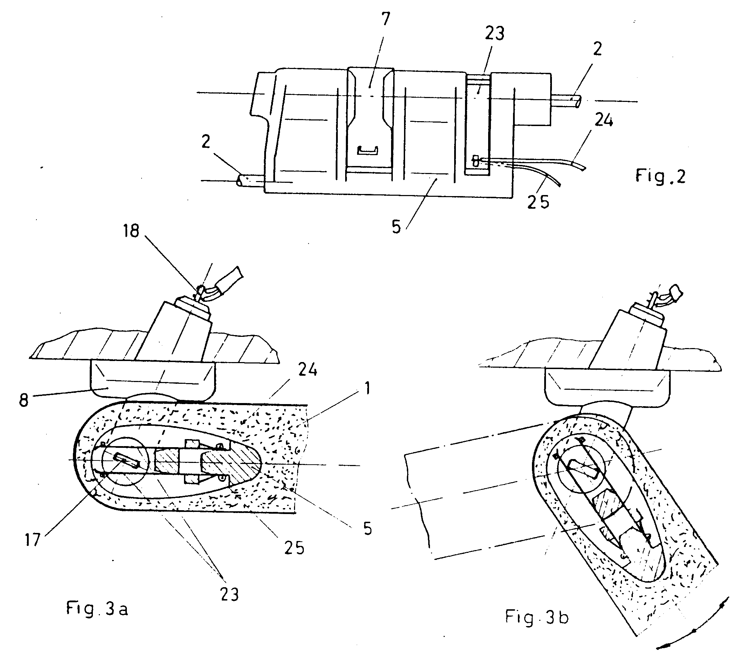

Fig. 2 ein Lagergehäuse der Sonnenblende,
Fig. 3a, 3b einen Schnitt III - III nach Fig. 1,

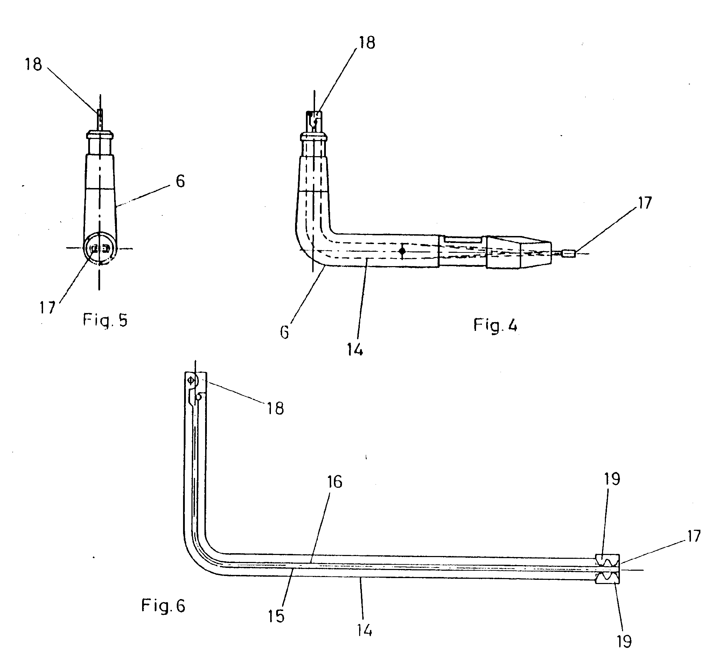

Fig. 4 eine Sonnenblendenachse in Vorderansicht,
Fig. 5 die Sonnenblendenachse in Seitenansicht und
Fig. 6 eine zur Sonnenblendenachse gehörende Einzelheit der Erfindung.

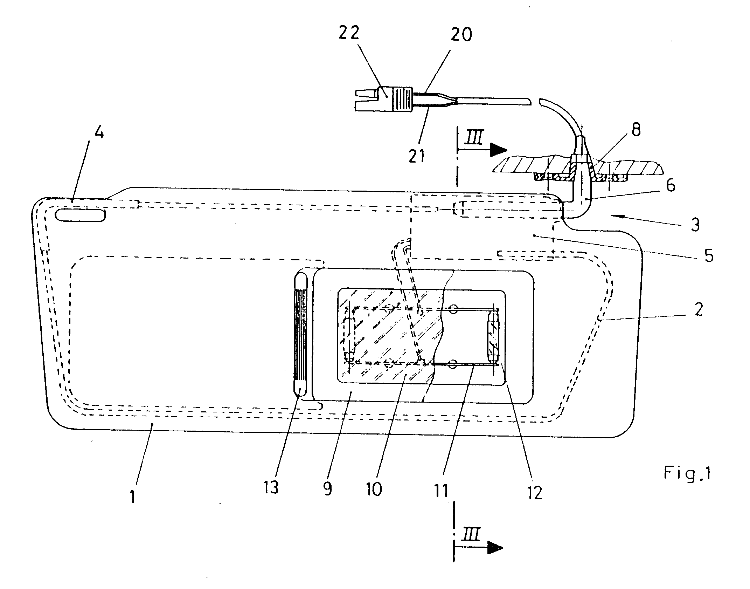

Fig. 1 zeigt eine Fahrzeugsonnenblende mit einem Sonnenblendenkörper 1, der aus einem Polstereigenschaften aufweisenden Material besteht und durch eine eingelagerte, zu einem Rahmen geformte Drahteinlage 2 ausgesteift ist. Zur schwenkbeweglichen Anordnung des Sonnenblendenkörpers 1 in einem Fahrzeug ist ein Drehlager 3 und eine mit einem nicht gezeigten Lagerböckchen zusammenwirkende Gegenlagerachse 4 vorgesehen.

Das Drehlager 3 besteht im einzelnen aus einem Lagergehäuse 5, das als Kunststoff-Spritzgußteil ausgebildet ist, einer ebenfalls als Kunststoff-Spritzgußteil ausgebildeten Sonnenblendenachse 6, die L-förmig gestaltet ist und einer den langen Schenkel der Sonnenblendenachse 6 radial klemmenden, U-förmig ausgebildeten Rastfeder 7.

Der kurze Schenkel der Sonnenblendenachse 6 ist drehbeweglich in einem an einer Fahrzeugkarosserie befestigbaren Lagerböckchen 8 gelagert, so daß der Sonnenblendenkörper 1 auch zu einer Fahrzeugseitenscheibe hin geschwenkt werden kann.

Der Sonnenblendenkörper 1 trägt einen in einem Gehäuse 9 angeordneten Spiegel 10 sowie eine ebenfalls im Gehäuse 9 geordnete Beleuchtungseinrichtung 11 mit Lichtquellen 12. Die dem Betrachter zugewandte Gehäuseabdeckung ist als den Spiegel 10 umgebender Leuchtrahmen ausgebildet und besteht demgemäß aus einem lichtdurchlässigen Material. Es versteht sich, daß anstelle eines Leuchtrahmens auch Leuchtfenster, Linsen od. dgl. vorgesehen sein können. Im dargestellten Ausführungsbeispiel ist der Spiegel 10 durch einen hin und her beweglich im Sonnenblendenkörper 1 gelagerten Schieber 13 abdeckbar bzw. freilegbar, jedoch kann auch eine schwenkbeweglich am Sonnenblendenkörper 1 oder am Gehäuse 9 gelagerte Abdeckklappe vorgesehen sein, wie es auch möglich ist, auf eine Abdeckung des Spiegels 10 zu verzichten.

Die elektrische Stromversorgung der Beleuchtungseinrichtung 11 erfolgt über die allgemeine Fahrzeugelektrik, d. h., die Beleuchtungseinrichtung 11 ist mit dem Stromversorgungsnetz eines Fahrzeuges verbindbar. Dabei sind sowohl der Stromzuführungsleiter als auch der Masseleiter durch die Sonnenblendenachse 6 geführt. Bei der neuen Sonnenblende ist vorgesehen, daß die Sonnenblendenachse 6 mit einer darin durch Umspritzen eingelagerten L-förmigen Leiterplatte 14 mit elektrisch leitfähigen Bahnen 15, 16 ausgebildet ist, wobei die freien Enden 17 und 18 aus den Stirnenden der Sonnenblendenachse 6 heraustreten. Am freien Ende 17 der Leiterplatte 14, die eine rechteckige Querschnittsform aufweist, sind zwei Kontaktelemente, die aus metallischen Krampen 19 bestehend aufgebracht. Die Krampen 19 sind U-förmig gestaltet und von den Schmalseiten her auf die Leiterplatte 14 aufgebracht. Am anderen freien Ende der Leiterplatte 14 sind Verbindungsleitungen 20, 21, die in einem Stecker 22 münden können angeschlossen. Zum Anschließen der Verbindungsleitungen 20, 21 an die Leiterplatte 14 können z.B. Lötstellen vorgesehen sein, jedoch versteht es sich von selbst, daß hier alle bekannten Verbindungstechniken zur Anwendung kommen können.

Wenn der Stecker 22 mit dem elektrischen Bordnetz eines Fahrzeuges gekuppelt ist, kann der Strom zu den Lichtquellen 12 fließen, wozu vorgesehen ist, daß die Krampen 19 mit am Lagergehäuse 5 befestigten, als Kontaktfedern 23 ausgebildeten Gegenkontaktelementen, von denen zur Beleuchtungseinrichtung 11 führende Verbindungsleitungen 24, 25 ausgehen, kontaktierbar sind. Dabei ist die Anordnung der Kontakte und Gegenkontakte so getroffen, daß eine Kontaktierung nur in bestimmten Winkelstellungen des Sonnenblendenkörpers 1 eintritt, während in anderen Winkelstellungen des Sonnenblendenkörpers 1 die Kontaktierung unterbrochen wird. Im allgemeinen ist die Anordnung so zu treffen, daß immer dann, wenn sich der Sonnenblendenkörper 1 und/oder der Spiegel 10 in der Gebrauchslage befindet, eine elektrische Kontaktierung besteht, während die Kontaktierung unterbrochen ist, wenn sich der Sonnenblendenkörper und/oder der Spiegel in der Nichtgebrauchslage befinden.

Die Kontaktfedern 23 sind im Lagergehäuse 5 oben- und untenendig abgestützt angeordnet. Die Kontaktfedern 23 sind einander beabstandet und sowohl parallel zueinander als auch parallel zu den Breitseiten des Sonnenblendenkörpers 1 verlaufend ausgerichtet. Insbesondere ist der Abstand der Kontaktfedern zueinander größer als die Dicke jedoch kleiner als die Breite des mit den Krampen 19 bestückten Leiterplattenendes 17. Ferner ist vorgesehen, daß das Leiterplattenende 17 derart aus dem entsprechenden Endbereich der Sonnenblendenachse 6 heraustritt, daß es mit seinen Breitseiten parallel zu den Kontaktfedern 23 verläuft und damit berührungsfrei zwischen den Kontaktfedern 23 liegt, wenn sich der Sonnenblendenkörper in seiner Nichtgebrauchslage befindet und daß das Leiterplattenende mit seinen Kontaktelementen 19 die Kontaktfedern 23 auseinanderspreizt und kontaktiert, wenn sich der Sonnenblendenkörper 1 in seiner Gebrauchslage befindet. Hierfür kann es erforderlich sein, auf den langen Schenkel der Leiterplatte 14 vor dem Umspritzen Torsionskräfte einwirken zu lassen, um diesen um seine Längsachse mehr oder weniger stark zu verformen.

## Patentansprüche

1. Sonnenblende für Fahrzeuge mit einem plattenförmigen Sonnenblendenkörper (1), der ein darin an einem Endbereich der oberen Längskante eingebettet angeordnetes, als Kunststoff-Spritzgußteil ausgebildetes, eine Sonnenblendenachse (6) einendig aufnehmendes Lagergehäuse (5), einen Kosmetikspiegel (10) und eine diesem zugeordnete Beleuchtungseinrichtung (11) trägt, welche über durch die Sonnenblendenachse (6) geführte Verbindungsleitungen (15, 16) mit dem Stromversorgungsnetz des Fahrzeugs verbindbar ist, dadurch gekennzeichnet, daß die Sonnenblendenachse (6) als Kunststoff-Spritzgußteil mit einer darin durch Umspritzen eingelagerten mit ihren freien Enden (17, 18) aus den Stirnenden der Sonnenblendenachse (6) heraustretenden Leiterplatte (14) mit elektrisch leitfähigen Bahnen (15, 16) ausgebildet ist.

2. Sonnenblende nach Anspruch 1, dadurch gekennzeichnet, daß die Leiterplatte (14) entsprechend der Sonnenblendenachse (6) L-förmig gestaltet ist.

3. Sonnenblende nach Anspruch 1 oder 2, dadurch gekennzeichnet, daß die Leiterplatte (14) aus zähelastischem Kunststoffmaterial gebildet ist.

4. Sonnenblende nach wenigstens einem der Ansprüche 1 bis 3, dadurch gekennzeichnet, daß an einem freien Leiterplattenende (17) zwei Kontaktelemente angebracht sind, die in zu bestimmenden Schwenklagen des Sonnenblendenkörpers (1) mit am Lagergehäuse (5) befestigten Gegenkontaktelementen, von denen zur Beleuchtungseinrichtung (11) führende Verbindungsleitungen (24, 25) ausgehen, kontaktierbar sind.

5. Sonnenblende nach Anspruch 4, dadurch gekennzeichnet, daß die Kontaktelemente aus, an die Leiterplatte (14) angeschlagenen metallischen Krampen (19) bestehen.

6. Sonnenblende nach wenigstens einem der Ansprüche 1 bis 5, dadurch gekennzeichnet, daß die Leiterplatte (14) ein etwa rechteckiges Querschnittsprofil aufweist und daß die Krampen (19), die U-förmig gestaltet sind, von den Schmalseiten her auf die Leiterplatte (14) aufgebracht sind.

7. Sonnenblende nach wenigstens einem der Ansprüche 1 bis 6, dadurch gekennzeichnet, daß die Gegenkontaktelemente als im Lagergehäuse (5) oben- und untenendig abgestützte, einander beabstandete Kontaktfedern (23) ausgebildet sind und daß die Kontaktfedern (23) parallel zueinander und parallel zu den Breitseiten des Sonnenblendenkörpers (1) verlaufend ausgerichtet sind.

8. Sonnenblende nach wenigstens einem der Ansprüche 1 bis 7, dadurch gekennzeichnet, daß der Abstand der Kontaktfedern (23) zueinander größer ist als die Dicke jedoch kleiner ist als die Breite des mit den Kontaktelementen (19) bestückten Leiterplattenendes (17) und daß das mit den Kontaktelementen (19) bestückte Leiterplattenende (17) derart aus dem entsprechenden Endbereich der Sonnenblendenachse (6) heraustritt, daß es mit seinen Breitseiten parallel zu den Kontaktfedern (23) verläuft und damit berührungsfrei zwischen den Kontaktfedern (23) liegt, wenn sich der Sonnenblendenkörper (1) in seiner Nichtgebrauchslage befindet und daß dasselbe Leiterplattenende (17) mit seinen Kontaktelementen (19) die Kontaktfedern (23) auseinanderspreizt und kontaktiert, wenn sich der Sonnenblendenkörper (1) in seiner Gebrauchslage befindet.

## Claims

1. A sun visor for vehicles comprising a lamellar sun visor body (1), with a plastic, injection-moulded, bearing housing (5) on one end region of the upper longitudinal edge accommodating one end of the sun visor shaft (6), a cosmetic mirror (10) and associated lighting device (11), which may be connected to the electrical power supply of the vehicle through connecting lines (15, 16) passing through the sun visor shaft (6), characterized in that the sun visor shaft (6) is a plastic injection-moulded part with a printed circuit board (14) encapsulated in it through injection-moulding, with its free ends (17, 18) projecting from the front ends of the sun visor shaft and with electricity conducting circuits (15, 16).

2. A sun visor in accordance with Claim 1, characterized in that the printed circuit board (14) is L-shaped to correspond to the sun visor shaft (6).

3. A sun visor in accordance with Claim 1 or 2, characterized in that the printed circuit board (14) is constructed from a tough plastic material.

4. A sun visor in accordance with at least one of Claims 1 to 3, characterized in that two contacts are attached to one free end of the printed circuit board (17) and make contact with counter-contacts fixed to the bearing housing (5) at particular swivel positions of the sun visor body (1), and from which the connecting lines (24, 25) lead to the lighting device (11).

5. A sun visor in accordance with Claim 4, characterized in that the contacts comprises metallic clips (19) attached to the printed circuit board (14).

6. A sun visor in accordance with at least one of Claims 1 to 5, characterized in that the printed circuit board (14) has an approximately rectangular cross-sectional profile and that the U-shaped clips (19) are attached to the printed circuit board (14) at their narrow ends.

7. A sun visor in accordance with at least one of Claims 1 to 6, characterized in that the counter-contacts take the form of contact springs (23) in the bearing housing (5), supported from above and below and arranged at a distance from each other, and that the contact springs (23) run parallel to each other and parallel to the wide sides of the sun visor body (1).

8. A sun visor in accordance with at least one of Claims 1 to 7, characterized in that the distance between the contact springs (23) is greater than the thickness of the printed circuit end (17) which has the contacts (19) attached, but is not as great as its width, and that the end of the printed circuit board (17) to which the contacts (19) are attached projects from the corresponding end region of the sun visor shaft (6) in such a way that its wide sides run parallel to the contact springs (23) and therefore lie, in a non-contact manner, between the contact springs (23) when the sun visor body (1) is not in position for use, and correspondingly, when the sun visor body (1) is in position for use, the same end of the printed circuit board (17) spreads the contact springs apart with its contacts (19), thereby making contact with them.

## Revendications

1. Pare-soleil pour véhicules comportant un corps de pare-soleil (1) en forme de plaque qui porte un logement de palier (5) recevant un axe de pare-soleil (6) à une extrémité, se présentant sous la forme d'une pièce de matière plastique moulée par injection, disposé en y étant encastré sur une zone terminale du côté longitudinal supérieur, un miroir de courtoisie (10) et un dispositif d'éclairement (11) qui lui est rattaché, lequel peut être relié au réseau d'alimentation du véhicule par des lignes de liaison (15,16) passant par l'axe (6) du pare-soleil, caractérisé en ce que l'axe de pare-soleil (6) se présente sous la forme d'une pièce de matière plastique moulée par injection avec une plaquette de circuits imprimés (14) comportant des pistes électriquement conductrices (15,16) qui y est encastrée par injection, dont les extrémités libres (17,18), sortent des extrémités frontales de l'axe de pare-soleil (6).

2. Pare-soleil selon la revendication 1, caractérisé en ce que la plaquette de circuits imprimés (14) présente une forme en L conformément à l'axe de pare-soleil (6).

3. Pare-soleil selon la revendication 1 ou 2, caractérisé en ce que la plaquette de circuits imprimés (14) est constituée par une matière viscoplastique.

4. Pare-soleil selon l'une au moins des revendications 1 à 3, caractérisé en ce que deux éléments de contact sont placés à une extrémité libre (17) de la plaquette de circuits imprimés, lesquels peuvent entrer en contact, dans des positions de pivotement à déterminer du corps de pare-soleil (1), avec des éléments de contre-contact fixés au logement de palier (5), dont partent des conducteurs de liaison (24,25) aboutissant au dispositif d'éclairement (11).

5. Pare-soleil selon la revendication 4, caractérisé en ce que les éléments de contact sont constitués par des pattes d'accrochage métallique (19) appliquées à la plaquette de circuits imprimés (14).

6. Pare-soleil selon l'une au moins des revendication 1 à 5, caractérisé en ce que la plaquette de circuits imprimés (14) présente un profil de section droite sensiblement rectangulaire, et en ce que les pattes d'accrochage (19), qui sont en U, sont appliquées à la plaquette de circuits imprimés (14) par les petits côtés.

7. Pare-soleil selon l'une au moins des revendications 1 à 6, caractérisé en ce que les éléments de contre-contact se présentent sous la forme de ressorts de contact (23) à distance mutuelle, s'appuyant au-dessus et au dessous dans le logement de palier (5), et en ce que les ressorts de contact (23) sont dirigés parallèlement entre eux et parallèlement aux côtés correspondant à la largeur du corps de pare-soleil (1).

8. Pare-soleil selon l'une des revendications 1 à 7, caractérisé en ce que la distance mutuelle des ressorts de contact (23) est supérieure à l'épaisseur, mais inférieure à la largeur de l'extrémité (17) de la plaquette de circuits imprimés comportant les éléments de contact (19), et en ce que l'extrémité (17) de la plaquette de circuits imprimés comportant les éléments de contact (19) sort de la zone terminale correspondante de l'axe de pare-soleil (6) de telle façon qu'elle est dirigée par ses côtés correspondant à la largeur parallèlement aux ressorts de contact (23) et est donc placée sans contact entre les ressorts de contact (23) lorsque le corps de pare-soleil (1) se trouve dans sa position de non-utilisation, et que la même extrémité (17) de la plaquette de circuits imprimés écarté, par ses éléments de contact (19), les ressorts de contact (23) et fait contact, lorsque le corps de pare-soleil (1) se trouve en position d'utilisation.
